# EUROPÄISCHE PATENTSCHRIFT

(11) **EP 2 937 644 B1**
(45) Veröffentlichungstag und Bekanntmachung des Hinweises auf die Patenterteilung: **02.01.2019**
(21) Anmeldenummer: 15164578.5
(22) Anmeldetag: 22.04.2015
(51) Int. Cl.: F24H 8/00, F24D 12/02

(54) **HEIZGERÄT MIT WÄRMEPUMPE**
HEATER WITH HEAT PUMP
APPAREIL DE CHAUFFAGE DOTÉ D'UNE POMPE À CHALEUR

(30) Priorität: 22.04.2014 DE 102014207540
(43) Veröffentlichungstag der Anmeldung: 28.10.2015
(73) Patentinhaber: Vaillant GmbH, 42859 Remscheid (DE)
(72) Erfinder: Heinen, Lars, 53123 Bonn (DE); Salg, Frank, 42897 Remscheid (DE); Wegner, Alexander, 45881 Gelsenkirchen (DE); Spahn, Hans-Josef, 40699 Erkrath (DE)
(74) Vertreter: Popp, Carsten

(56) Entgegenhaltungen:
- EP-A2- 2 006 607
- EP-A2- 2 336 652
- WO-A1-2006/067820
- DE-A1- 3 149 183
- DE-A1- 19 740 398
- DE-U1-202006 019 616
- DE-U1-202013 010 117
- FR-A1- 2 991 756
- FR-A3- 2 979 974
- JP-A- S59 115 991

## Beschreibung

Die Erfindung bezieht sich auf die Kombination eines brennstoffbetriebenen Heizgeräts mit einer Wärmepumpe.

Bei üblichen Heizgeräten wird zwischen Brennwert- und Heizwertgeräten unterschieden. Bei Brennwertgeräten wird das Abgas eines brennstoffbetriebenen Brenners derart weit abgekühlt, dass Kondensationswärme genutzt werden kann. Hierdurch ist ein thermischer Wirkungsgrad von 108 % bezogen auf den Heizwert möglich. Minimal mögliche Abgastemperatur ist hierbei die Rücklauftemperatur des Heizkreislaufs oder die Kaltwassereinlauftemperatur. Die Abgase sind in diesem Fall feucht und verfügen über wenig Auftrieb, so dass Brennwertgeräte Gebläse und eine feuchtigkeitsdichte Abgasleitung benötigen. Bei Heizwertgeräten wird das Abgas nur soweit abgekühlt, dass keine Kondensation des im Abgas befindlichen Wasserdampfes stattfindet. Hierdurch ist das Abgas auch warm genug, um durch den thermischen Auftrieb in einem Kamin entweichen zu können. Ferner können mehrere abgasseitig druckentkoppelte Heizwertgeräte gemeinsam an einem Kamin betrieben werden. Zum gemeinsamen Betrieb ist es notwendig, dass nicht die Abgase eines Gerätes durch ein anderes stillstehendes Gerät in dessen Aufstellraum entweichen können und der Kamin über den entsprechenden Querschnitt verfügt.

Beim Austausch von Heizgeräten wird angestrebt, dass Heizgeräte zumindest durch Brennwertgeräte ersetzt werden. Hierbei ergibt sich jedoch das Problem, dass das Abgas eines Brennwertgerätes derart feucht ist, dass eine Kaminsanierung notwendig wird und eine Mehrfachbelegung nicht mehr möglich ist. Zur Lösung dieses Problems ist zum Beispiel aus DE 202 09 753 bekannt, dass feuchtes Abgase eines Brennwertgerätes wieder aufgeheizt werden kann, damit es trocken mit thermischem Auftrieb in einen Kamin geleitet werden kann. Dies kann beispielsweise durch einen heißen Abgasstrom, der über einen Bypass am Kondensationswärmetauscher vorbei geleitet wird, geschehen. Auf diese Art kann die Kondensationswärme im Abgas genutzt werden, so dass mit derartigen Geräten in Verbindung mit einer Niedertemperatur- Heizung ein Wirkungsgrad von 103 % bezogen auf den Heizwert möglich ist. In Verbindung mit im Altbau üblichen Hochtemperatur- Heizungen liegt der Wirkungsgrad rücklauftemperaturbedingt unterhalb 100 %. Ebenfalls können die Effizienz mindernde anlagenbedingte hydraulische Effekte (wie zum Beispiel eine Rücklauftemperaturanhebung durch Vorlauftemperaturbeimischung) kompensiert werden.

Aus EP 2336652 A2 sind mehrere Kombinationen eines brennstoffbetriebenen Heizgeräts mit einer Wärmepumpe bekannt. Die dabei eingesetzte Wärmepumpe braucht eine Mindestlaufzeit, um effizient zu arbeiten. Häufige Start-Stopp Zyklen verringern zudem die Lebensdauer der Wärmepumpe. Wird aus Kostengründen ein einstufiger Kompressor eingesetzt, so lässt sich die Kälteleistung nur eingeschränkt regeln; diese ist vorwiegend von der momentanen Brennerleistung des Brennwertgerätes und der Rücklauftemperatur abhängig. Hierdurch wäre die Kälteleistung in vielen Betriebszuständen zu hoch, was zu ineffizientem Betrieb oder bei ungünstigen Betriebszuständen zu einer Vereisung in der Abgasleitung führen kann.

Das Gebrauchsmuster DE 20 2013 010 117 U1 offenbart eine Heizungsanlage mit Abgaswärmenutzung. Zusätzlich zu einem mit dem Rücklauf des Heizungs-Versorgungskreislaufes verbundenen Brennwert-Wärmetauscher, der durch die Abgase der Heizungsanlage erwärmt wird, ist ein zweiter Brennwert-Wärmeübertrager im Abgasstrom vorgesehen, der über einen Pufferspeicher die Wärmequelle für eine Wärmepumpe bereitstellt, die die Rücklauftemperatur als Wärmesenke der Wärmepumpe anhebt..

Der Erfindung liegt die Aufgabe zugrunde, den Wirkungsgrad derartiger Kombinationen eines brennstoffbetriebenen Heizgeräts mit einer Wärmepumpe weiter zu steigern und zudem eine bedingte Entkopplung von Wärmeanfall und Wärmebedarf zu schaffen.

Diese Aufgabe wird durch eine Vorrichtung mit den Merkmalen des Anspruchs 1 dadurch gelöst, dass in der Abgasleitung ein Wärmetauscher angeordnet ist, welcher mit einem Pufferspeicher verbunden ist und dieser Pufferspeicher wiederum wärmeleitend mit dem Verdampfer der Kompressionswärmepumpe stromauf des Pufferspeichers verbunden ist. Hierdurch ist es auch möglich, nachteilige Betriebszustände zu vermeiden. Vorteilhaft ist hierbei, dass die Wärme aus dem Abgasleitungswärmetauscher direkt mit einer hohen Quellentemperatur zum Verdampfer geleitet wird und der Pufferspeicher hier nicht durch seine thermische Trägheit zu einer Verzögerung führt.

Vorteilhafte Ausgestaltungen ergeben sich durch die Merkmale der abhängigen Ansprüche. Die Erfindung wird nun anhand der Figuren detailliert erläutert. Hierbei zeigen:
Figur 1 eine nicht erfindungsgemäße Kombination eines Brennwertgerätes mit einer Wärmepumpe sowie einem Pufferspeicher, in dem der Verdampfer der Wärmepumpe positioniert ist,
Figur 2 eine Variante einer erfindungsgemäßen Kombination eines Brennwertgerätes mit einer Wärmepumpe sowie einem Pufferspeicher, welcher über einen externen Wärmetauscher mit dem Verdampfer der Wärmepumpe verbunden ist,
Figur 3 eine Variante einer erfindungsgemäßen Kombination eines Brennwertgerätes mit einer Wärmepumpe sowie einem Pufferspeicher, in welchem Latentspeichermaterial gespeichert ist,
Figur 4 eine Variante einer nicht erfindungsgemäßen Kombination eines Brennwertgerätes mit einer Wärmepumpe sowie einem Pufferspeicher,
Figur 5 eine optionale direkte Brauchwassererwärmung sowie
Figur 6 eine weitere optionale direkte Brauchwassererwärmung.

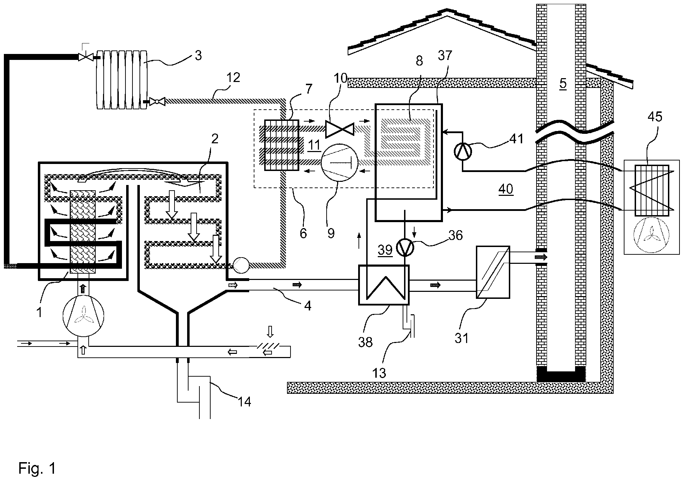

Figur 1 zeigt ein brennstoffbetriebenes Heizgerät mit einem Brenner 1 und einem Abgaswärmetauscher 2 mit Siphon 14; bei diesem handelt es sich um einen Kondensationsabgaswärmetauscher zum Abkühlen der Abgase des Brenners 1 unter den Taupunkt (ca. 57°C) unter Nutzung der Kondensationswärme und Übertragung auf einen Heizkreislauf 3. Eine Brauchwasserbereitung ist nicht explizit dargestellt. Die Abgase des Abgaswärmetauschers 2 werden über eine Abgasleitung 4 zu einem Kamin 5 und von dort in die Umgebung geleitet. In der Abgasleitung 4 stromab des Abgaswärmetauschers 2 ist ein Abgasleitungswärmetauscher 38 angeordnet, welcher über einen flüssigkeitsführenden Kreislauf 39, in welchem eine Umwälzpumpe 36 das wärmeleitende Fluid fördert, mit einem Pufferspeicher 37 verbunden ist. In diesem Pufferspeicher 37 ist der Verdampfer 8 einer Kompressionswärmepumpe 6 positioniert. Die Kompressionswärmepumpe 6 verfügt ferner über einen Kompressor 9, einen Kondensator 7 und ein Expansionsventil 10 in einem Kältemittelkreislauf 11. Der Kondensator 7 ist mit der Rücklaufleitung 12 des Heizkreislaufs 3 verbunden. Eine Nachheizeinrichtung 31 (z.B. Gas- Pilotflamme, elektrisches Heizelements, oder ähnlichem) ist in der Abgasleitung 4 stromab dem Wärmetauscher 38 angeordnet. Der Pufferspeicher 37 ist über einen Umweltwärmekreislauf 40, in dem sich eine Umwälzpumpe 41 befindet, mit einem Luftwärmetauscher 45 verbunden. Alternativ könnte er mit einem Solarkollektor oder einem Regen- oder Abwasserspeicher verbunden sein.

Der Brenner 1 des Heizgerätes verbrennt ein Brenngas (CₙHₘ) mit Luft, wodurch im Wesentlichen Wasserdampf (H₂O) und Kohlendioxid (CO₂) entsteht. Im Abgaswärmetauscher 2 wird das Abgas durch das Wasser des Heizkreislaufs 3 abgekühlt. Kondensierender Wasserdampf wird über den Siphon 14 abgeleitet. Das feuchte und relativ kalte Abgas strömt durch die Abgasleitung 4 und durchströmt zunächst den Abgasleitungswärmetauscher 38, in dem das Abgas weitere thermische Energie auf den flüssigkeitsführenden Kreislauf 39 und somit den Pufferspeicher 37 abgibt. Über den Verdampfer 8 im Pufferspeicher 37 wird über die Kompressionswärmepumpe 6 Wärme im Kondensator 7 auf den Heizkreislauf 3 übertragen. Das abgekühlte Fluid wird im Expansionsventil 10 weiter abgekühlt und strömt wieder in den Verdampfer 8 ein, um dort Wärme aufzunehmen.

Mittels des Pufferspeichers 37 lässt sich somit eine bedingte Entkopplung zwischen dem Wärmepumpen- und Brennwertgerätebetrieb erzielen. Durch die Förderleistung der Umwälzpumpe 36 kann das Temperaturniveau im Pufferspeicher 37 beeinflusst werden. Die Kompressionswärmepumpe 6 kann während des Betrieb des Brennwertgerätes ein- und ausgeschaltet werden. Ist die Kompressionswärmepumpe 6 ausgeschaltet, so kann der Pufferspeicher 37 geladen werden. Es ist jedoch auch möglich, keine Wärme in den Pufferspeicher 37 einzubringen, indem die Umwälzpumpe 36 ausgeschaltet bleibt. Ferner kann die Kompressionswärmepumpe 6 betrieben werden, während der Brenner 1 ausgeschaltet bleibt. Ist eine weitere Wärmequelle mit dem Pufferspeicher 37 verbunden, so kann ausschließlich über diese Wärme in das System eingebracht werden.

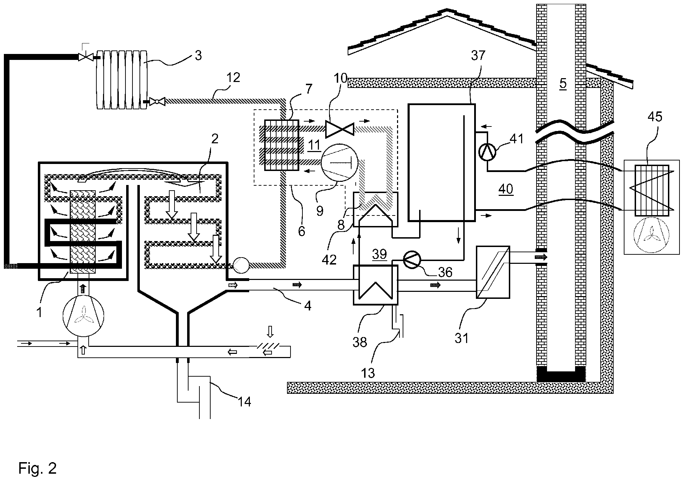

Die Anlage gemäß Figur 2 unterscheidet sich von der Anlage in Figur 1 dadurch, dass der Verdampfer 8 der Kompressionswärmepumpe 6 außerhalb des Pufferspeichers 37 angeordnet und mit diesem über einen weiteren Wärmetauscher 42 verbunden ist. Der Pufferspeicher 37 der mit dem Verdampfer 8 verbundene Wärmetauscher 42 sowie der Abgasleitungswärmetauscher 38 sind in diesem Fall in Reihe geschaltet, um keine weitere Umwälzpumpe zu benötigen. Vorteilhaft ist hierbei, dass die Wärme aus dem Abgasleitungswärmetauscher 38 direkt mit einer hohen Quellentemperatur zum Verdampfer 8 geleitet wird und der Pufferspeicher 37 hier nicht durch seine thermische Trägheit zu einer Verzögerung führt. Ferner kann mit dieser Anordnung die Kältemittelmenge im System im Vergleich zur Anlage in Figur 1 reduziert werden, wenn der Verdampfer 8 nah beim Kompressor 9 angeordnet wird.

Soll eine weitere Entkopplung ermöglicht werden, so ist der Pufferspeicher 37 jeweils mit eigenen Kreisläufen mit dem Abgasleitungswärmetauscher 38, als auch mit dem mit dem Verdampfer 8 verbundenen Wärmetauscher 42 zu verbinden. Der Verdampfer 8 und der damit verbundene Wärmetauscher 42 können beispielsweise als Plattenwärmeüberträger ausgeführt sein.

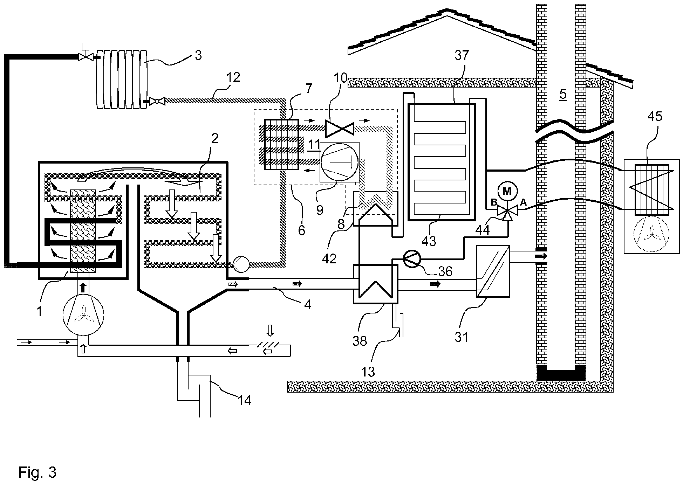

In der Variante gemäß Figur 3 ist in dem Pufferspeicher 37 Latentwärmespeichermaterial (auch Phase Change Material PCM genannt) gespeichert. Ein Speicherwärmetauscher 43 durchdringt das Latentwärmespeichermaterial und sorgt für die Wärmeeinbringung beziehungsweise die Wärmeabfuhr. Die Schmelztemperatur des Latentwärmespeichermaterials ist dem Arbeitsbereich der Wärmepumpe und den Anforderungen an die Abgasentfeuchtung anzupassen. Sinnvolle Schmelztemperaturen liegen im Bereich 10°C - 20°C. Als Phasenwechselmaterialien können Paraffine oder Salzhydrate Verwendung finden.

Auch bei diesem System kann Umweltwärme eingekoppelt werden. Hierfür wird der Luftwärmetauscher 45 über das Umschaltventil 44 in den Wasser / Solekreislauf hinzu geschaltet. Dies kann alternativ auch mit einer weiteren Pumpe für den Quellenkreis erfolgen.

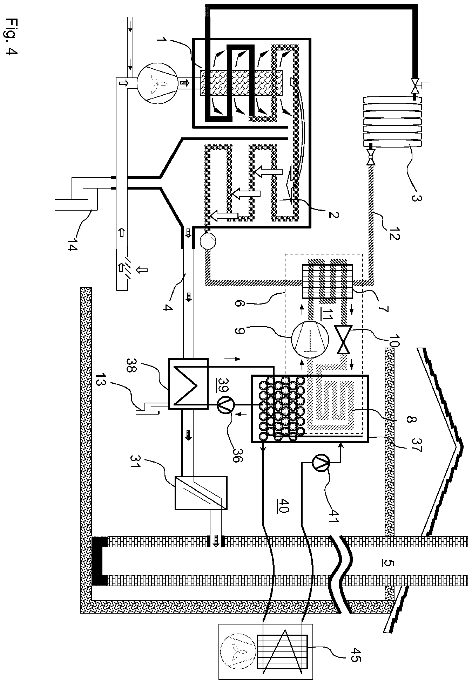

Figur 4 zeigt eine Variante, bei welcher verkapseltes Latentwärmespeichermaterial verwendet wird. Der Verdampfer 8 ist im oberen Teil des Pufferspeichers 37 angeordnet. Darunter ist verkapseltes Latentwärmespeichermaterial eingebracht. Durch die Verkapselung kann der Wasser / Solekreislauf das Latentwärmespeichermaterial durchströmen.

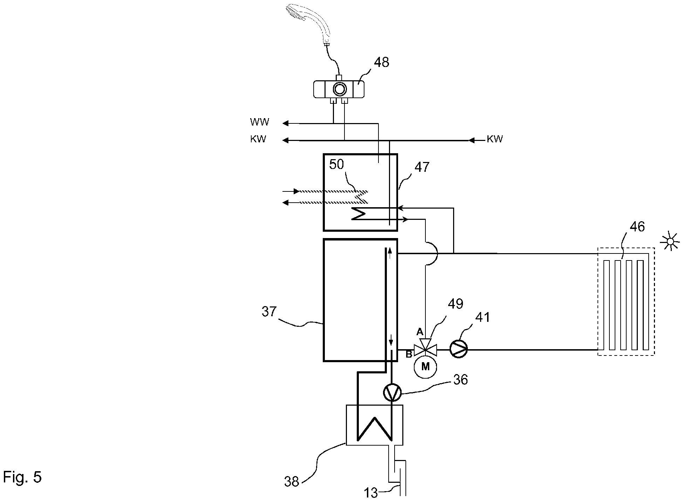

In Figur 5 ist eine Variante dargestellt, mittels deren bei Verwendung eines Solarabsorbers 46 im Sommer Solarwärme direkt zur Trinkwasserbereitung genutzt werden kann. In diesem Fall kann der Betrieb der Kompressionswärmepumpe 6 oder des Brenners 1 vermieden werden. Die Wärme des Solarabsorbers 46 kann in einen bivalenten Solarspeicher 47 oder den Pufferspeichers 37 eingebracht werden. Zur Umschaltung dient ein Umschaltventil 49. Die Warmwasserbereitung erfolgt über einen Solarspeicher 47. Über das Umschaltventil 49 kann, abhängig von der erreichten Temperatur im Solarkollektor, zwischen dem Solarspeicher 47 oder dem Pufferspeichers 37 umgeschaltet werden. Ein weiterer Wärmetauscher 50 zur konventionellen Nacherwärmung wird über ein weiteres Umschaltventil mit dem Heizkreis verbunden (beides nicht dargestellt). So kann bei unzureichender solarer Einstrahlung das Brennwertgerät und/oder die Wärmepumpe zur Nacherwärmung genutzt und somit Zapfstellen 48 versorgt werden.

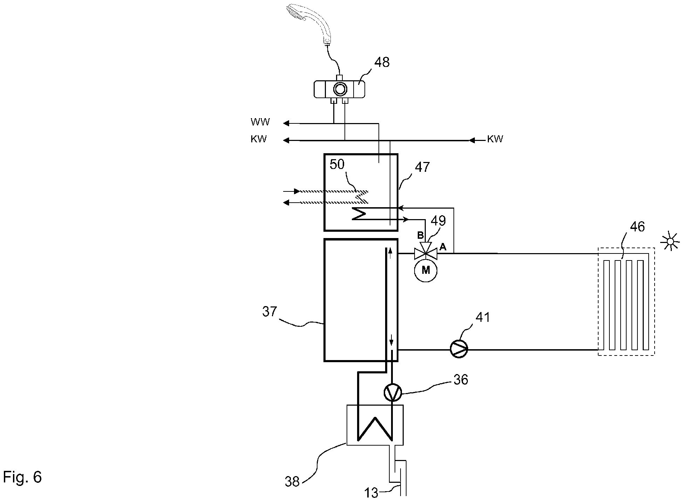

Bei der Variante gemäß Figur 6 wird der Pufferspeicher 37 immer durchströmt. Der Solarspeicher 47 kann hinzu geschaltet werden, wenn die Temperatur im Rücklauf von dem Solarabsorber 46 für eine direkte Warmwasserbereitung ausreicht. Durch den nachgeschalteten Pufferspeicher 37 kann der Vorlauf zum Solarabsorber 46 weiter abgekühlt werden, was die Effizienz erhöht. Der Pufferspeicher 37 kann im Sommerbetrieb mit höheren Temperaturen (30 - 50°C) betrieben. Dadurch kann die Wärmepumpe 6 bei der Nacherwärmung effizienter arbeiten. In diesem Fall kann das System nicht zur Abgastrocknung eingesetzt werden, sondern muss an einer feuchteunempfindlichen Abgasführung betrieben werden. Mit 2 Umschaltventilen ist optional eine Kombination der beiden Schaltungen möglich.

### Bezugszeichenliste

- 1: Brenner
- 2: Abgaswärmetauscher
- 3: Heizkreislauf
- 4: Abgasleitung
- 5: Kamin
- 6: Kompressionswärmepumpe
- 7: Kondensator
- 8: Verdampfer
- 9: Kompressor
- 10: Expansionsventil
- 11: Kältemittelkreislauf
- 12: Rücklaufleitung Heizkreislauf
- 13: Siphon Abgasleitungswärmetauscher
- 14: Siphon Abgaswärmetauscher
- 31: Nachheizeinrichtung
- 36: Umwälzpumpe
- 37: Pufferspeicher
- 38: Abgasleitungswärmetauscher
- 39: Flüssigkeitsführender Kreislauf
- 40: Umweltwärmekreislauf
- 41: Umwälzpumpe Umweltwärmekreislauf
- 42: Wärmetauscher Verdampfer
- 43: Speicherwärmetauscher
- 44: Umschaltventil
- 45: Luftwärmetauscher
- 46: Solarabsorber
- 47: Bivalenter Solarspeicher
- 48: Zapfstellen
- 49: Umschaltventil
- 50: Oberer Wärmetauscher im bivalenten Speicher

## Patentansprüche

1. Brennstoffbetriebenes Heizgerät mit einem Brenner (1) und einem Abgaswärmetauscher (2), vorzugsweise Kondensationsabgaswärmetauscher, zum Abkühlen der Abgase des Brenners (1) und Übertragung der Wärme auf einen Heizkreislauf (3) und / oder Brauchwasser, sowie einer Abgasleitung (4) zum Abführen der Abgase von dem Abgaswärmetauscher (2) in die Umgebung, vorzugsweise zum Abführen über einen Kamin (5),
wobei die Abgasleitung (4) stromab des Abgaswärmetauschers (2) mit einem Verdampfer (8) einer Kompressionswärmepumpe (6) wärmeleitend verbunden ist sowie
der Kondensator (7) der Kompressionswärmepumpe (6) mit dem Heizkreislauf (3) oder einer Kaltbrauchwasserleitung verbunden ist, wobei in der Abgasleitung (4) stromab des Abgaswärmetauschers (2) ein Abgasleitungswärmetauscher (38) angeordnet ist, welcher über einen flüssigkeitsführenden Kreislauf (39) mit einem Pufferspeicher (37) verbunden ist und dieser Pufferspeicher (37) wärmeleitend mit dem Verdampfer (8) der Kompressionswärmepumpe (6) verbunden ist,. **dadurch gekennzeichnet, dass** der Verdampfer (8) stromauf des Pufferspeichers (37) und stromab des Abgasleitungswärmetauschers (38) mit dem flüssigkeitsführenden Kreislauf (39) verbunden ist.

2. Brennstoffbetriebenes Heizgerät nach Anspruch 1, **dadurch gekennzeichnet, dass** der Pufferspeicher (37) mit Latentwärmespeichermaterial gefüllt ist.

3. Brennstoffbetriebenes Heizgerät nach Anspruch 2, **dadurch gekennzeichnet, dass** das Latentwärmespeichermaterial verkapselt ist.

4. Brennstoffbetriebenes Heizgerät nach einem der Ansprüche 1 bis 3, **dadurch gekennzeichnet, dass** zusätzlich eine Umweltwärmequelle, vorzugsweise ein Solarabsorber (46) oder ein Luftwärmetauscher (45) mit dem Pufferspeicher (37) und / oder einem Solarspeicher verbunden ist.

## Claims

1. Fuel-operated heater with a burner (1) and a waste gas heat exchanger (2), preferably a condensation waste gas heat exchanger, for cooling the waste gases of the burner (1) and transferring the heat to a heating circuit (3) and/or process water, and a waste gas line (4) for removing the waste gases from the waste gas heat exchanger (2) into the environment, preferably for removing via a flue (5),
wherein the waste gas line (4) is connected thermoconductively downstream of the waste gas heat exchanger (2) to an evaporator (8) of a compression heat pump (6)
and
the condenser (7) of the compression heat pump (6) is connected to the heating circuit (3) or a cold process water line, wherein in the waste gas line (4) downstream of the waste gas heat exchanger (2) a waste gas line heat exchanger (38) is arranged, which is connected via a fluid-carrying circuit (39) to a buffer (37) and said buffer (37) is connected thermoconductively to the evaporator (8) of the compression heat pump (6) **characterised in that** the evaporator (8) is connected upstream of the buffer (37) and downstream of the waste gas line heat exchanger (38) to the fluid-carrying circuit (39).

2. Fuel-operated heater according to claim 1, **characterised in that** the buffer (37) is filled with phase change material.

3. Fuel-operated heater according to claim 2, **characterised in that** the phase change material is encapsulated.

4. Fuel-operated heater according to any of claims 1 to 3, **characterised in that** in addition an environmental heat source, preferably a solar absorber (46) or an air heat exchanger (45), is connected to the buffer (37) and/or a solar accumulator.

## Revendications

1. Appareil de chauffage à combustible avec un brûleur (1) et un échangeur de chaleur de gaz d'échappement (2), de préférence échangeur de chaleur de gaz d'échappement à condensation, pour le refroidissement des gaz d'échappement du brûleur (1) et le transfert de la chaleur à un circuit de chauffage (3) et/ou eau sanitaire, ainsi qu'une conduite de gaz d'échappement (4) pour l'évacuation des gaz d'échappement de l'échangeur de chaleur de gaz d'échappement (2) à l'environnement, de préférence pour l'évacuation par le biais d'une cheminée (5),
dans lequel la conduite de gaz d'échappement (4) est reliée de manière thermoconductrice en aval de l'échangeur de chaleur de gaz d'échappement (2) à un évaporateur (8) d'une pompe à chaleur à compression (6)
ainsi que
le condenseur (7) de la pompe à chaleur à compression (6) est relié au circuit de chauffage (3) ou à une conduite d'eau sanitaire froide, dans lequel un échangeur de chaleur de conduite de gaz d'échappement (38) est agencé dans la conduite de gaz d'échappement (4) en aval de l'échangeur de chaleur de gaz d'échappement (2), lequel est relié à un accumulateur tampon (37) par le biais d'un circuit conduisant un fluide (39) et ledit accumulateur tampon (37) est relié de manière thermoconductrice à l'évaporateur (8) de la pompe à chaleur à compression (6), **caractérisé en ce que** l'évaporateur (8) est relié en amont de l'accumulateur tampon (37) et en aval de l'échangeur de chaleur de conduite de gaz d'échappement (38) au circuit conduisant un fluide (39).

2. Appareil de chauffage à combustible selon la revendication 1, **caractérisé en ce que** l'accumulateur tampon (37) est rempli de matériau accumulateur de chaleur latente.

3. Appareil de chauffage à combustible selon la revendication 2, **caractérisé en ce que** le matériau accumulateur de chaleur latente est encapsulé.

4. Appareil de chauffage à combustible selon l'une quelconque des revendications 1 à 3, **caractérisé en ce qu'**en plus une source de chaleur de l'environnement, de préférence un absorbeur solaire (46) ou un échangeur de chaleur à air (45) est relié à l'accumulateur tampon (37) et/ou à un accumulateur solaire.
